Europäisches Patentamt

European Patent Office

Office européen des brevets

(11) Numéro de publication: **0 396 475 B1**

(12) **FASCICULE DE BREVET EUROPEEN**

(45) Date de publication de fascicule du brevet: **05.07.95**

(51) Int. Cl.6: **C01B 31/34**, C01B 31/30, B01J 27/22, B01D 53/64, B01J 27/224

(21) Numéro de dépôt: **90420150.6**

(22) Date de dépôt: **26.03.90**

(54) **Obtention de carbures de métaux lourds à surface spécifique élevée.**

(30) Priorité: **28.03.89 FR 8904433**
**19.10.89 FR 8914084**
**19.12.89 FR 8917538**

(43) Date de publication de la demande:
**07.11.90 Bulletin 90/45**

(45) Mention de la délivrance du brevet:
**05.07.95 Bulletin 95/27**

(84) Etats contractants désignés:
**AT BE CH DE DK ES FR GB GR IT LI LU NL SE**

(56) Documents cités:
**EP-A- 0 120 798       EP-A- 0 283 910**
**EP-A- 0 286 294       FR-A- 2 398 808**
**FR-A- 2 596 745       US-A- 2 800 393**
**US-A- 4 008 090       US-A- 4 155 928**
**US-A- 4 216 034       US-A- 4 515 763**

**PATENT ABSTRACTS OF JAPAN vol. 11, no. 361 (C-459)(2808) 25 novembre 1987, & JP-A-62 132718 (MITSUI TOATSU CHEM.) 16 juin 1987**

(73) Titulaire: **PECHINEY RECHERCHE (Groupement d'Intérêt Economique régi par l'Ordonnance du 23 Septembre 1967)**
**10, place des Vosges**
**F-92400 Courbevoie (FR)**

(72) Inventeur: **Ledoux, Marc-Jacques**
**11, rue d'Ussé**
**F-67000 Strasbourg (FR)**
Inventeur: **Guille, Jean-Louis**
**17 avenue des Vosges**
**F-67000 Strasbourg (FR)**
Inventeur: **Pham-Huu, Cuong**
**18, rue de Copenhague**
**F-67000 Strasbourg (FR)**
Inventeur: **Marin, Sophie**
**3, Place Saint Thomas**
**F-67000 Strasbourg (FR)**

(74) Mandataire: **Mougeot, Jean-Claude et al**
**PECHINEY**
**28, rue de Bonnel**
**F-69433 Lyon Cedex 03 (FR)**

Rank Xerox (UK) Business Services
(3.10/3.09/3.3.3)

## Description

## DOMAINE TECHNIQUE DE L'INVENTION

L'invention concerne l'obtention de carbures métalliques ayant une surface spécifique élevée stable même à haute température et l'activation de ladite surface dans le cas notamment où ils sont utilisés comme catalyseur dans des réactions chimiques.

## ETAT DE LA TECHNIQUE

La catalyse à haute température est notamment utilisée en pétrochimie (par exemple réformage...), les pots d'échappement catalytique ou toute autre réaction chimique à haute température.

Il est intéressant d'une part de pouvoir conduire des réactions catalytiques à des températures les plus élevées possibles, d'autre part de pouvoir régénérer économiquement les catalyseurs avec ou sans leur support pour des utilisations répétées. En vue d'une telle application, il est nécessaire que le catalyseur et/ou son support ne soient pas détériorés lorsqu'ils sont soumis aux hautes températures. De ce point de vue les alumines à grande surface ne sont pas satisfaisantes. C'est pourquoi la demanderesse à déjà mis au point un procédé d'obtention de support de catalyseur en carbure de silicium à surface spécifique élevée, dopé ou non, sur lequel est déposé l'élément catalyseur (EP A-0313480).

Poursuivant ses recherches, elle a alors cherché à obtenir des carbures de métaux, comme par exemple Mo, W, Re, V, Nb, Ta, Ti..., de surface spécifique élevée, pouvant dépasser 200 m$^2$/g. Ces carbures présentent également un grand intérêt comme support de catalyseur à haute température; mais, contrairement à un élément non métallique comme Si, ils présentent des propriétés catalytiques en tant que tels, ou peuvent exacerber ou modifier les propriétés des phases actives catalytiques (par exemple de Pt) qui y sont déposées. Il est bien évident que des poudres de carbures ayant une telle surface peuvent également être utilisées à d'autres applications, comme par exemple, l'obtention de pièces frittées ayant des propriétés inédites à l'aide de procédés simplifiés.

On connaît (Journal of Catalysis Vol. 106, p. 125-133, 1987) un procédé d'obtention de carbure Mo$_2$C de surface spécifique ne dépassant pas 100 m$^2$ g$^{-1}$, partant d'un oxyde solide MoO$_3$ et d'un mélange gazeux CH$_4$ + H$_2$ selon une réaction programmée en température devant tenir compte de la valeur du rapport H$_2$/CH$_4$, réaction qui demande donc une attention particulière pour éviter la formation de carbone polymère qui est un contaminant de catalyseur et qu'il faut éventuellement détruire par un traitement spécial. De plus ce procédé assez complexe se prête mal à une production industrielle d'un produit non contaminé.

Par ailleurs, le document Journal of Catalysis, vol. 112, p. 44-53,1988, tout en signalant le besoin d'avoir du carbure Mo$_2$C ayant une surface spécifique de plus de 200 m$^2$g$^{-1}$, propose un procédé, pour obtenir seulement un carbure alpha-MoC$_{1-x}$ de surface spécifique supérieure à 200 m$^2$g$^{-1}$. Ce procédé est aussi plus complexe que celui cité précédemment puisqu'il passe par une étape intermédiaire d'obtention de nitrure qui est ensuite transformé en carbure également par une réaction programmée en température.

## OBJECTIF DE L'INVENTION

Devant ces difficultés, la demanderesse a recherché la mise au point d'un procédé simple et utilisable pour une production, à grande échelle, de carbures de métaux ayant une surface spécifique élevée, c'est-à-dire toujours supérieure à 20 m$^2$/g, ou mieux à 50 m$^2$/g, mais en général très supérieure à 100 m$^2$/g, ce carbure pouvant être sous forme de granulé ou de pièces de formes.

Un autre objectif est de disposer de carbure de métaux lourds pouvant servir de préférence soit de support de catalyseur, soit de catalyseur utilisé tel quel ou déposé sur un support ; d'autres applications de ces carbures sont également possibles dans d'autres domaines, par exemple le frittage.

Un autre objectif est d'obtenir des carbures mixtes de métaux lourds à surface spécifique élevée qui peuvent présenter des avantages significatifs dans leur utilisation en catalyse. On peut ainsi obtenir des pièces de forme ou des grains ayant un coeur de nature chimique différente de celle de la périphérie desdites pièces ou grains. Ainsi ces carbures peuvent jouer le rôle à la fois de support de catalyseur et de catalyseur actif.

## DESCRIPTION DE L'INVENTION

L'invention est un procédé d'obtention de carbure de métaux lourds de surface spécifique élevée caractérisé en ce qu'on fait réagir un composé à l'état gazeux dudit métal lourd avec du carbone réactif ayant une surface spécifique au moins égale à 200 m$^2$/g à une température comprise entre 900 et 1400° C.

Il est particulièrement adapté à l'obtention de gros granulés ou de pièces de forme, la transformation du carbone en carbure se faisant sur une épaisseur pouvant atteindre 2 mm.

Les métaux objets de l'invention sont de préférence les métaux de transition (groupes 3b, 4b, 5b, 6b, 7b, 8 des séries ou périodes 4, 5, 6), les terres rares (lanthanides) et les actinides.

D'autre part, lesdits métaux sont évidemment ceux qui ont un composé volatil au moins dans les conditions de température et de pression de la réaction. Parmi ces composés, on choisit de préférence les oxydes ou les iodures, mais d'autres composes peuvent être utilisés, par exemple chlorures, fluorures ou certains complexes organo-metalliques sublimables... Parmi les métaux ayant cette caractéristique on a plus particulièrement retenu, pour l'intérêt catalytique de leurs carbures, des métaux comme Mo, W, Re, V, Nb ou encore Ta, Ti, Cr, Ni.

Le procédé consiste à faire réagir le composé métallique sous forme gazeuse avec le carbone réactif à grande surface.

Il est important que le composé métallique gazeux attaque directement le carbone réactif à grande surface spécifique pour que l'on puisse conserver une mémoire de ladite grande surface, dans le carbure résultant, avec des propriétés de surface nécessaires aux applications catalytiques.

Pour cela il est parfois avantageux de séparer, au départ dans l'enceinte réactionnelle, d'un côté le composé métallique et de l'autre le carbone réactif de façon telle que lors du traitement thermique le composé métallique gazeux aille réagir avec le carbone réactif. Ainsi on peut introduire dans le réacteur une couche du composé métallique solide, éventuellement la recouvrir par un feutre de carbone, puis disposer une ou des pièces de forme ou une couche de grains de carbone réactif directement sur la couche de composé ou sur le feutre et ensuite traiter thermiquement dans des conditions telles que le composé solide devienne gazeux et réagisse alors avec le carbone.

Il est préférable que la gazéification du composé volatil ait lieu le plus près possible du carbone réactif de façon à ce que le contact réactionnel soit rapide. Mais le courant gazeux peut être généré dar , une zone évaporatoire séparée.

Dans certains cas, généralement déterminés par la nature chimique du métal, on peut également mettre en contact au départ le composé métallique et le carbone réactif par un mélange approximatif ou grossier.

On effectue la réaction à une température comprise entre 900 et 1400° C. Mais il est avantageux d'opérer à la température la plus basse possible, en veillant cependant à ce que la vitesse de réaction soit suffisamment élevée, ainsi on opère de préférence entre 1000 et 1250° C. Au delà de cette température pour la plupart des carbures, et notamment pour les carbures de molybdène et de tungstène, on note une détérioration notable de la surface spécifique obtenue.

La réaction a lieu sous pression réduite habituellement inférieure à 13 hPa (10 mm de Hg). Il est important que la pression partielle du composé métallique gazeux soit la plus élevée possible, la pression résiduelle étant due principalement à CO produit par la réaction.

Le carbone réactif soumis à réaction doit avoir une surface spécifique BET d'au moins 200 m$^2$g$^{-1}$ et il peut être utilisé sous forme de poudre ou sous forme de pièces préformées, par exemple par agglomération de poudres ou par extrusion d'une résine suivie d'une carbonisation.

On peut utiliser toute sorte de carbone actif, notamment du graphite, du charbon de bois, du noir de fumée mais on préfère utiliser du charbon actif granulé ou aggloméré, obtenu par exemple à partir de fibres végétales ou de résines décomposées.

Ledit carbone peut être dopé par un élément métallique, comme Ce, Ti, U, Zr, Hf, lanthanide..., par imprégnation à l'aide d'une solution, aqueuse ou autre, d'un composé soluble (tel que acétyl acétonate, nitrate, ...) décomposé par un traitement thermique préalablement au procédé d'obtention du carbure de métal lourd selon l'invention. La surface spécifique du carbone est alors quelque peu réduite lors de ce traitement de dopage, mais elle reste en général supérieure à 200 m$^2$/g et le taux de transformation en carbure de métal lourd selon l'invention peut, suivant l'élément dopant, être sensiblement augmenté. Le dopage est de l'ordre de 4 à 10 % en poids de métal.

Ce dopage peut aussi entraîner des modifications à façon de la structure électronique du carbure selon l'invention et lui conférer des propriétés catalytiques nouvelles.

La quantité de carbone réactif doit être excédentaire par rapport à la stoechiométrie de la réaction de formation du carbure de métal lourd, réaction du type : carbone + oxyde métallique ---> monoxyde de carbone + carbure métallique.

L'excès molaire est habituellement au moins supérieur à trois fois ladite quantité stoéchiométrique et de préférence 5 fois, ce qui se traduit par exemple, dans le cas de l'obtention de $Mo_2C$ et WC, par des rapports molaires C/M (M représentant le métal) respectifs de 3/1 et 5/1. Si l'excès est inférieur à la limite basse l'apparition d'une phase métallique peut diminuer fortement la surface spécifique du carbure obtenu. De même, si la température utilisée se situe dans la partie basse de la gamme décrite, on a intérêt à augmenter l'excès de carbone (donc le rapport C/M) pour éviter l'apparition de la phase métallique.

Le taux de conversion du carbone actif est de préférence compris entre 40 et 100 % mais on préfère se placer vers 75 % pour avoir une excellente pureté du carbure (absence de métal) et une résistance mécanique très améliorée.

L'invention peut être mise en oeuvre de différentes façons. On opère en général dans un creuset en graphite, fermé par un couvercle en feutre de carbone simplement posé, qui peut être installé dans une enceinte (par exemple un tube) de silice revêtu intérieurement d'un feutre de carbone et fermé par un couvercle de feutre de carbone ; ledit tube est entouré d'un moyen de chauffage, et le tout est enfermé dans une enceinte étanche refroidie, à l'intérieur de laquelle on peut faire le vide.

On peut alors introduire dans le creuset un mélange de poudre de carbone réactif, préalablement dopé ou non, et du composé solide du métal lourd ; après avoir fait le vide, on chauffe à la température de réaction choisie, à laquelle ledit composé doit être gazeux et on laisse en température le temps que la réaction de carburation se fasse, habituellement de 1 à 7 H.

On peut également introduire d'abord une couche du composé solide, puis, la recouvrant, une couche de carbone réactif, ou une pièce de forme en carbone actif aggloméré, puis chauffer comme précédemment après avoir fait le vide.

Un feutre de carbone peut éventuellement être interposé entre le carbone et le composé.

On peut aussi gazéifier le composé volatil à une température différente de la température de réaction. Pour cela, le composé solide à volatiliser peut être installé en fond de creuset et le carbone reposer sur un feutre de carbone situé à distance dudit composé à l'aide d'entretoises, le chauffage de la partie basse et de la partie haute se fait à des températures différentes, à l'aide par exemple d'une densité de chauffage ou d'enroulements de chauffage différents, et...

Le procédé selon l'invention permet ainsi d'obtenir des carbures à grande surface spécifique qui dépasse non seulement 100 $m^2g^{-1}$, comme cela a déjà été dit, mais facilement 200 $m^2g^{-1}$ voire 300 $m^2g^{-1}$. Ces produits, qui peuvent être obtenus en grande quantité, sont aisément manipulables et parfaitement homogènes même si au départ les réactifs étaient séparés ou mélangés de façon hétérogène. Ils peuvent ainsi être utilisés directement comme catalyseur actif, dopé ou non, régénérable, mais également comme support de catalyseur.

Selon un premier perfectionnement, l'invention permet également d'obtenir des carbures mixtes à surface spécifique élevée. Par carbures mixtes on entend des pièces de forme, granulés... comportant un coeur recouvert par une ou plusieurs couches externes successives de nature différente ; le coeur peut être en carbone réactif, comme on l'a vu précédemment, ou en un autre matériau à surface spécifique élevée. Ce matériau peut être soit un carbure métallique selon l'invention, soit un carbure de silicium, selon la demande européenne EP A-0313480, soit tout autre support en oxyde tel que la silice, l'alumine, et la ou les couches externes sont en carbure métallique à surface spécifique élevée selon l'invention, différent de celui du coeur et différent d'une couche à l'autre. Ainsi le coeur peut jouer le rôle d'un support de catalyseur, le catalyseur étant alors constitué par le carbure métallique selon l'invention de la couche externe ; ce perfectionnement permet de limiter la consommation du composé métallique gazeux, coûteux, tout en conservant les propriétés catalytiques du carbure mixte obtenu, mais aussi de modifier à loisir ses propriétés mécaniques.

Une première variante de ce perfectionnement consiste à faire réagir partiellement le composé de métal lourd à l'état gazeux avec du carbone réactif ayant une surface spécifique au moins égale à 200 $m^2g^{-1}$ à une température comprise entre 900° C et 1400° C en limitant le taux de conversion du carbone en carbure métallique de façon à transformer incomplètement ledit carbone. Généralement on limite le taux de conversion à une valeur inférieure à 40 %, de préférence comprise entre environ 10 et 20 % ; on obtient ainsi un composé intermédiaire carbure-carbone (appelé également carbure mixte) comprenant une couche extérieure en carbure de métal lourd à surface spécifique élevée, selon l'invention, qui enrobe une âme en carbone réactif.

Une telle configuration permet d'obtenir un composé carbure-carbone ayant des propriétés mécaniques renforcées, dans le cas où le carbure métallique en lui-même a des caractéristiques mécaniques inférieures à celles du carbone réactif.

Pour limiter le taux de conversion du carbone réactif on peut, alternativement ou en combinaison, soit réduire la quantité de compose gazeux utilisé dans la réaction, soit limiter la durée de ladite réaction, les autres conditions opératoires ainsi que les caractéristiques des produits mis en oeuvre étant les mêmes que celles décrites plus haut afin d'éviter la formation de métal comme impureté.

Dans le but, par exemple, de renforcer encore la solidité de ces composés carbure-carbone une deuxième variante dudit perfectionnement montre que l'on peut transformer, dans une nouvelle étape, l'âme de carbone en un carbure d'un métal ou métalloïde différent pour obtenir une nouvelle sorte de carbure mixte par réaction avec un composé à l'état gazeux dudit métal ou métalloïde.

Au cours de cette nouvelle étape, il est avantageux de transformer l'âme en $\beta$ SiC selon le procédé de la demande européenne EP-A-0313480, dans lequel on génère des vapeurs de SiO que l'on met ensuite en contact du carbone réactif à convertir en SiC, ici le composé carbure-carbone obtenu précédemment, à une température comprise entre 1100 et 1400° C.

Dans ce cas, on obtient selon l'invention un carbure mixte, sous forme de particules ou de pièces, comprenant une couche extérieure de carbure de métal lourd à grande surface et une âme en carbure de Si, habituellement à grande surface, ledit carbure mixte ayant en particulier une solidité améliorée.

Dans le cas où la couche extérieure est en carbure de molybdène, on note également la présence avantageuse de siliciure de molybdène.

Mais on peut également obtenir au cours de ladite nouvelle étape, un carbure d'un autre métal lourd selon le procédé de la présente invention décrit plus haut. Dans ce cas, le carbure mixte obtenu comprend deux carbures différents de métal lourd qui constituent d'une part la couche extérieure et d'autre part l'âme, pour répondre à certaines applications particulières.

Les métaux et leurs composés servant à transformer l'âme de carbone en carbure peuvent être choisis dans les mêmes catégories que celles servant à obtenir la couche extérieure, c'est-à-dire d'une part les métaux de transition (3b, 4b, 5b, 6b, 7b, 8 des séries 4-5-6 de la classification périodique des éléments), les terres rares ou les actinides, d'autre part les oxydes et les iodures.

Ces composés carbure-carbone ou carbures mixtes, en particulier celui ayant une âme en SiC, de surface spécifique élevée et de solidité améliorée, conviennent particulièrement à des emplois de support de catalyseur ou même directement de catalyseur, dans les réactions chimiques à haute température en particulière dans la pétrochimie (reformage, craquage, oxydation, etc...), les pots d'échappement catalytiquè, etc...

Par ailleurs, en vue d'un deuxième perfectionnement la demanderesse a mis en évidence que, après préparation des carbures de métal lourd à surface spécifique élevée (mixtes ou non), leur manipulation à l'air peut conduire à une altération superficielle dudit carbure.

Un tel phénomène se produit principalement avec les carbures oxydables et engendre la présence d'oxydes superficiels qui nuisent en particulier à l'activité catalytique du carbure. Il est donc important de pouvoir éliminer ces oxydes ; cette opération doit se faire in situ, c'est-à-dire après mise en place du carbure à grande surface à l'endroit où il doit être employé comme catalyseur, de façon à ce qu'après avoir éliminé les oxydes, ledit catalyseur ne soit plus en contact avec l'air ou une atmosphère oxydante.

Pour éliminer l'oxyde, il est connu d'opérer une réduction par l'hydrogène à 800° C : mais avec une telle opération d'une part on ne réduit pas complètement l'oxyde, d'autre part il se forme du métal de sorte que l'activité spécifique du catalyseur carbure n'est pas régénérée : le catalyseur obtenu a une sélectivité différente et un rendement diminué.

On peut également utiliser un mélange hydrogène-hydrocarbure (par exemple le pentane) à 700° C : c'est la méthode habituelle de préparation des carbures ; dans ce cas, on obtient bien du carbure mais également un dépôt de carbone polymérique qui empoisonne le catalyseur. Ce dépôt de carbone ne peut être éliminé qu'en partie par un traitement à l'hydrogène à 600° C et un empoisonnement rédhibitoire persiste: ce dernier est par exemple assez important avec WC mais un peu moins important avec $Mo_2C$ qui catalyse cette élimination sous forme d'hydrocarbure.

Face à ces problèmes, la demanderesse a trouvé, selon ledit deuxième perfectionnement, un procédé permettant d'améliorer l'activité catalytique de la surface des catalyseurs composés de carbures de métaux lourds de surface spécifique élevée altérés par une pellicule d'oxyde, lesdits carbures étant soit les carbures simples soit l'ensemble des carbures mixtes décrits précédemment. Ce procédé est caractérisé en ce que l'on imprègne lesdits carbures à l'aide d'une solution suffisamment diluée d'un sel d'au moins un métal du groupe 8, tel que Pt, Pd, Rh, Co... pour avoir un carbure imprégné comportant peu dudit métal, sèche le carbure imprégné et traite à haute température sous un courant d'hydrogène et d'hydrocarbure gazeux.

Il est avantageux de compléter le procédé par un traitement de finition consistant à faire passer sur le catalyseur ainsi préparé un courant d'$H_2$ à haute température, en général comprise entre 300° C et 700° C

EP 0 396 475 B1

et de préférence entre 400 et 600° C, pendant 1 à 20 H environ, avec éventuellement un ou plusieurs paliers de température intermédiaire. Ce traitement peut également comporter une mise préalable sous vide vers 350-500° C pendant 1 à 3 H.

Cette amélioration consiste en particulier à supprimer la couche d'oxyde ou d'oxycarbure qui a pu venir temporairement passiver la surface du carbure quand on le met à l'air après sa synthèse, et cela sans formation importante de carbone polymérique.

Dans le cas de Pt, il est particulièrement important que la quantité de Pt retenu par le carbure imprégné, comptée en % poids de Pt par rapport à la masse totale de carbure traité, soit limitée. Il suffit d'utiliser en général des teneurs d'au plus 0,05 % environ et de préférence supérieure à 0,001 %. Des teneurs de 0,25 % couramment utilisées sur des supports d'alumine ou en vue de l'obtention de carbures de métaux lourds sont impropres dans le cadre de la présente invention, car l'activité du catalyseur serait celle du Pt et non celle du carbure.

La solution de sel dudit métal du groupe 8 peut être réalisée à l'aide de n'importe quel solvant éliminable par chauffage, par exemple eau, alcool, autres solvants organiques suffisamment volatils... De même, il suffit de choisir un composé de métal, soluble dans un de ces solvants, qui ne laisse pas de résidu solide autre que le métal, après le traitement à haute température.

Le séchage est effectué généralement à l'air puis à l'étuve à une température généralement comprise entre 120 et 140° C.

Le mélange $H_2$-hydrocarbure peut avoir des proportions quelconques, pourvu que l'on dispose de la quantité nécessaire en éléments constitutifs pour effectuer la réduction et la carburation de la pellicule d'oxydes. On utilise généralement l'hydrocarbure dans des proportions (en volume) de 1 à 50 %. Il est avantageux d'utiliser ce mélange en excès et de recycler l'excès après en avoir éliminé l'eau sous-produite au cours de la réaction, par exemple par condensation.

L'hydrocarbure est de préférence aliphatique, par exemple le pentane ou un mélange d'hydrocarbures.

Le traitement à haute température se fait en général à des températures supérieures à 500° C ou de préférence 700° C. Il est habituellement plus simple d'opérer à la pression atmosphérique ; l'utilisation d'autres pressions est possible.

Ledit deuxième perfectionnement permet ainsi d'obtenir un catalyseur à base de carbures de métaux lourds ayant un rendement d'isomérisation supérieur à celui d'un catalyseur classique au Pt, par exemple constitué de 0,25 % de Pt sur un support d'alumine utilisé dans les mêmes conditions de température. Il est important de noter que cette sélectivité est due et est propre aux carbures ainsi préparés et est totalement différente de la sélectivité du Pt. En particulier avec le carbure de tungstène on peut développer dans certaines conditions une aromatisation importante, ce qui est un atout favorable.

Après utilisation et épuisement du catalyseur, sa régénération peut se faire avantageusement par traitement à l'hydrogène à 600° C, opération assez éloignée de la régénération oxydante classique, mais beaucoup plus simple à effectuer surtout en milieu industriel.

Les catalyseurs et supports de catalyseur selon l'invention peuvent être utilisées dans toutes les réactions chimiques à haute température et en particulier dans la pétrochimie (cracking, reformage...) ou dans les pots d'échappement catalytique des moteurs à combustion interne.

L'application des carbures de métaux lourds à surface spécifique élevée selon l'invention à la conversion catalytique des gaz d'échappement des moteurs à combustion interne est particulièrement intéressante. Notamment avec les gaz des pots d'échappement des véhicules automobiles, lesdits carbures sont utilisés et efficaces à une température supérieure à 200° C ou plus généralement de l'ordre de 350° C ou davantage.

Ces carbures, utilisés comme catalyseur, permettent, selon cette application, de convertir complètement les gaz d'échappement : NOx en azote, le monoxyde de carbone en dioxyde, les hydrocarbures en $CO_2$ et eau.

On peut utiliser comme carbures de métal lourd des carbures simples en particulier $Mo_2C$, WC..., mais également des carbures mixtes, notamment ceux contenant une âme en SiC ou en carbone réactif recouverte d'un carbure de métal lourd à surface spécifique élevée par exemple du type $Mo_2C$, WC...

Il est avantageux pour opérer la réaction de conversion, en présence du carbure métallique catalyseur, d'effectuer une activation de la surface dudit carbure selon le deuxième perfectionnement décrit ci-dessus. Rappelons que cette activation comprend substantiellement une imprégnation du carbure métallique par une faible quantité d'un sel en solution d'un métal du groupe 8 de la classification périodique des éléments (en particulier le Pt), un séchage, un traitement thermique à haute température en présence de $H_2$ et d'hydrocarbure gazeux, et éventuellement un traitement de finition à haute température en présence d'$H_2$ ; les traitements thermiques sont effectués en général après avoir installé le carbure sur le site où sera effectuée la réaction de conversion catalytique.

6

Il peut être également avantageux de modifier la surface active du carbure selon l'invention en la nitrurant et en l'oxydant partiellement, le carbure dopé par du nitrure et de l'oxyde ainsi obtenu pouvant avoir des propriétés catalytiques particulières.

La régénération après usage des carbures à très grande surface spécifique de l'invention, utilisés comme support ou comme catalyseur peut se faire simplement par exemple par traitement thermique à l'hydrogène, comme cela a déjà été dit.

Ces carbures à surface spécifique élevée peuvent également ouvrir de nouvelles applications dans des domaines comme le frittage des carbures, le revêtement de surface par des carbures, etc...

**EXEMPLES**

Exemple 1

Cet exemple illustre l'obtention d'un carbure de molybdène à surface spécifique élevée selon la réaction : $2 MoO_3$ (vapeur) $+ C$ (solide) $\longrightarrow Mo_2C + 3 CO$.

Dans une premièrè série d'essais on a préparé un mélange sommaire de charbon actif en particules de 0,2 à 0,5 mm, ayant une surface spécifique d'environ 1150 $m^2g^{-1}$ et d'une poudre d'oxyde solide $MoO_3$.

Ce mélange a été introduit dans un réacteur de graphite, comme vu plus haut. L'enceinte a été mise sous vide à 0,13 hPa (0,1 mm Hg) avant chauffage. Les principales conditions opératoires et les résultats de surface spécifique obtenus par mesure BET sont rassemblés dans le tableau 1 :

7

TABLEAU 1

| Test | Masse de carbone engagée g | Masse de Mo O3 engagée g | T° réaction °C | Durée Heure | C/Mo molaire | Surface spécifique du carbure m2/g | Conversion du carbone (CO inclus) % | Masse récupérée g |
|---|---|---|---|---|---|---|---|---|
| 4 | 1.058 | 2.169 | 1155 | 3h30 | 6/1 | 213 | 50% | 1.716 |
| 5 | 1.144 | 2.614 | 1140 | 3h30 | 5/1 | 191 | 64% | 2.033 |
| 7 | 1.141 | 3.646 | 1160 | 3h30 | 4/1 | 89 | 76% | 2.588 |
| 8 | 1.203 | 4.734 | 1155 | 3h30 | 3/1 | 40 | 100% | 2.854 |
| 9 | 1.213 | 7.278 | 1155 | 3h30 | 2/1 | 2 | 100% | 2.918 |

Le test 9 illustre que quand l'excès de carbone est insuffisant, la surface spécifique élevée ne peut pas être obtenue.

Le taux de conversion est calculé par rapport au carbone de départ en tenant compte du CO formé.

Tous les produits ont un aspect très homogène.

Le principal produit obtenu est le $Mo_2C$ hexagonal avec parfois des traces de $Mo_2C$ cubique, de gamma MoC et/ou de métal.

8

Ainsi, on obtient le carbure $Mo_2C$ hexagonal avec une surface spécifique supérieure à 100 $m^2g^{-1}$ dans les essais 4 et 5, et à 200 $m^2g^{-1}$ dans l'essai 4, et bien que la surface spécifique soit élevée dans les tests 7 et 8, on voit qu'elle est nettement inférieure à celle des essais 4 et 5. Ceci est dû à la présence d'une phase métallique assez importante, et illustre l'intérêt qu'il y a à opérer avec un excès de carbone important.

Une deuxième série d'essais a été réalisée selon la même méthode pour tester l'influence de la température de réaction ; ils sont regroupés dans le tableau 2.

TABLEAU 2

| Test | Masse de carbone engagée (g) | Masse de MoO3 engagée (g) | T° réaction (°C) | Durée (heure) | C/Mo (molaire) | Surface spécifique du carbure (m2/g) | Conversion du carbone (CO inclus) (%) | Masse récupérée (g) |
|---|---|---|---|---|---|---|---|---|
| 14 | 1.005 | 2.016 | 1210 | 4 | 6/1 | 139 | 50% | 1.442 |
| 15 | 1.208 | 2.781 | 1170 | 4 | 5.2/1 | 159 | 58% | 2.09 |
| 16 | 0.987 | 2.013 | 1150 | 4 | 6/1 | 202 | 51% | 1.596 |
| 17 | 1.227 | 2.157 | 1120 | 4 | 6.8/1 | 261 | 47% | 1.851 |
| 18 | 1.001 | 2.024 | 1065 | 4 | 6/1 | 239 | 51% | 1.465 |

Dans ces essais, le produit obtenu est le même que précédemment : $Mo_2C$ hexagonal avec parfois des traces de $Mo_2C$ cubique, de gamma MoC et/ou de Mo métal.

On note que, toutes choses égales par ailleurs, c'est avec les températures les moins élevées qu'on obtient les plus grandes surfaces spécifiques.

Une troisième série d'essais a été réalisée en séparant au départ les particules de charbon actif de la poudre solide de MoO3 sous jacente par un feutre de carbone, pour tester l'influence de la durée de réaction. Les autres paramètres de réaction ont été les mêmes que précédemment. Les résultats sont donnés dans le tableau 3.

**TABLEAU 3**

| Test | Masse de carbone engagée (g) | Masse de MoO3 engagée (g) | T° réaction (°C) | Durée (heure) | C/Mo (molaire) | Surface spécifique du carbure (m2/g) | Conversion du carbone (CO inclus) (%) | Mo (métal) résiduel (%) |
|---|---|---|---|---|---|---|---|---|
| 49 | 0,553 | 1,309 | 1210 | 4 | 3,5 | 196 | 46 | 1 |
| 50 | 0,564 | 1,354 | 1210 | 5 | 3,5 | 181 | 51 | 0,5 |
| 59 | 1,184 | 2,798 | 1210 | 6 | 3,5 | 176 | 57 | 0 |
| 46 | 1,134 | 2,614 | 1210 | 8 | 3,5 | 168 | 64 | 0 |

Dans ce tableau on voit qu'il y a intérêt à augmenter la durée de réaction pour éviter la présence de Mo métallique (mesurée par diffraction X quantitative).

Exemple 2

Cet exemple illustre l'obtention de carbure de tungstène à grande surface spécifique selon la réaction :
$3 WO_2$ (vapeur) $+ 8 C$ solide $---> WC + W_2C + 6 CO$.

Le même protocole de fabrication que celui de l'exemple 1 a été suivi, le charbon actif ayant été mélangé grossièrement à de l'oxyde solide $WO_2$.

Les résultats obtenus sont donnés dans le Tableau 4 avec les principales conditions opératoires.

TABLEAU 4

| Test | Masse de carbone engagée (g) | Masse de WO2 engagée (g) | T° réaction (°C) | Durée (heure) | C/W (molaire) | Surface spécifique du carbure (m2/g) | Conversion du carbone (CO inclus) (%) | Masse récupérée (g) |
|---|---|---|---|---|---|---|---|---|
| 23 | 1.607 | 3.946 | 1155 | 4 | 7.3/1 | 394 | - | 1535 |
| 25 | 1.614 | 4.044 | 1175 | 5 | 7.3/1 | 365 | 51% | 1.183 |
| 26 | 1.194 | 4.275 | 1190 | 4 | 5/1 | 350 | 45% | 1.216 |
| 27 | 1.501 dopé 3.1% Ce | 5.123 | 1185 | 3 | 5/1 | 294 | 73% | 0.726 |
| 29 | 1.01 | 4.61 | 1203 | 3 | 4/1 | 386 | 57% | 0.621 |

Le taux de conversion du carbone est, dans l'exemple 2, d'environ 50 %.

Le principal produit obtenu est le WC hexagonal avec une surface spécifique supérieure à 300 $m^2g^{-1}$ dans les essais 23-25-26-29, et des traces de $W_2C$ et de tungstène métallique.

Par contre, le test 27, où le carbone a été dopé au Ce, a donné en quantité équivalente WC hexagonal et alpha-$W_2C$ hexagonal et une surface spécifique un peu plus faible mais proche de 300 $m^2g^{-1}$.

13

Les surfaces spécifiques sont particulièrement élevées.

Exemple 3

Cet exemple, est analogue aux exemples 1 et 2, et illustre l'obtention d'un carbure de vanadium à grande surface spécifique selon la réaction :

$$V_2O_5 \text{ (gaz)} + 7C \text{ (solide)} \longrightarrow 2VC + 5CO$$

Le même protocole de fabrication que celui de l'exemple 1 a été suivi, le charbon actif ayant été mélangé grossièrement à l'oxyde solide $V_2O_5$.

Les résultats et les conditions opératoires sont les suivantes :

| Test n° 34 | |
|---|---|
| masse de carbone engagée | 0,800 g |
| masse de $V_2O_5$ engagée | 1,001 g |
| température de réaction | 1196° C |
| durée de réaction | 4 h |
| C/V molaire | 6/1 |
| surface spécifique du carbure | 235 m²/g |
| conversion du carbone (CO inclus) | 57 % |

L'analyse aux rayons X, montre la présence de VC et de gamma VC.

Exemple 4

Des essais de réactivation in situ ont été effectués selon le deuxième perfectionnement sur des carbures de tungstène et molybdène de surface spécifique élevée obtenus dans les exemples précédents.

Ces carbures ont été imprégnés à l'aide d'une solution aqueuse de $H_2 Pt Cl_6$ de façon à obtenir, après séchage à l'étuve à 135° C, une quantité de Pt de 0,05 % rapportée à la masse totale de carbure. Le traitement thermique a eu lieu à 700° C à pression atmosphérique, avec un mélange d'hydrogène et de pentane (2,7 kPa, soit 20 mm de mercure, de pression partielle).

Il a été suivi d'un traitement de finition par mise sous vide à 400° C pendant 1 H, suivi d'un traitement par $H_2$ à 400° C pendant 14 H puis à 600° C pendant 2 H.

L'activité des carbures réactivés obtenus a été contrôlée en mesurant leur sélectivité et rendements lors d'une réaction de type reforming : isomérisation du méthylcyclopentane (MCP) et du n-Hexane (HEX). Le principe consiste à faire passer un composé organique gazeux ici du type (C6) sur le catalyseur étudié et à mesurer dans un premier temps son taux de conversion représentant le total des produits isomères et craqués obtenus, puis à noter les proportions respectives des produits isomères et des produits craqués (comptés en équivalent C6 selon l'exemple) obtenus, sachant que ce qui est le plus intéressant dans le cadre de la présente invention concerne la sélectivité pour obtenir de préférence l'isomérisation, et enfin à détailler les résultats de l'isomérisation elle-même (vitesse, rendement).

Dans le cas du catalyseur $Mo_2C$ du présent exemple, on a effectué des comparaisons de conversion des MCP et HEX avec des $Mo_2C$, non réactivé, réactivé à l'aide de $H_2$ seul à 800° C ou à l'aide du mélange $H_2$ + pentane à 700° C (suivi d'un traitement sous vide à 400° C pendant 1 H, puis sous $H_2$ à 400° C pendant 14 H et à 600° C pendant 2 H pour éliminer le carbone polymérique), et réactivé selon le deuxième perfectionnement, comme cela vient d'être décrit.

Dans le cas de WC, ne figure pas la comparaison avec WC non réactivé, par contre figure une comparaison d'isomérisation obtenue en présence d'un catalyseur classique constitué d'un support d'alumine gamma imprégné de 0,25 % de Pt.

Les réactions comparatives d'isomérisation en présence des différents catalyseurs ont été conduites dans les mêmes conditions opératoires.

Cependant, les températures ne sont pas toujours les mêmes et il est important de le noter, compte tenu que ce paramètre a une influence considérable sur la vitesse r d'isomérisation et donc sur son rendement ; en particulier dans le cas du carbure réactivé par $H_2$ seul, la température d'isomérisation est nettement plus élevée (600° C) et ce seul paramètre multiplie ladite vitesse par plusieurs ordres de grandeur pouvant

atteindre $10^4$ à $10^6$ par rapport à une température de 350° C.

Les tableaux 5 et 5a regroupent donc les résultats comparatifs des isomérisations du MCP et de HEX obtenus avec un catalyseur carbure $Mo_2C$ à surface spécifique élevée réactivé de différentes façons.

Les tableaux 6 et 6a regroupent également des résultats analogues obtenus avec WC réactivé de différentes façons et avec $Al_2O_3$ + 0,25 % Pt.

Dans ces tableaux :

.  conversion % : représente le pourcentage molaire de produit de départ transformé par isomérisation et craquage.

.  r : représente la vitesse de conversion exprimée en $10^{-10}$ mole de produit de départ transformé par seconde et rapportée à 1 g de catalyseur. Cela représente l'activité du catalyseur.

.  Si % : représente la sélectivité, c'est-à-dire la proportion molaire de produit isomérisé présent dans le produit transformé obtenu (exprimé en C6).

.  Craquage % : représente la proportion molaire de produit craqué présent dans le produit transformé obtenu (exprimé en $C_6$). La somme (Si + craquage) est donc égale à 100.

.  rendement d'isomérisation ($10^{-10}$ mole/s.g) : c'est le produit (rxSi) exprimé en $10^{-10}$ mole d'isomères obtenus par seconde et ramené à un gramme de catalyseur.

.  isomères en C6 (%) : représente le détail des isomères obtenus, exprimé en % molaire (DM-2,2B = dimdéthyl 2,2 butane, M2P = méthyl 2 pentane, M3P = méthyl 3 pentane, HEX = n-hexane, MCP = méthylcyclopentane, BEN = benzène, CYC = cyclohexane). Son total est égal à 100.

.  hydrocarbures (%) : représente le détail des produits craqués obtenus, ramené en $C_6$ et exprimé en % molaire. Son total est égal à 100.

Dans chacune des figures 1 et 2, relatives respectivement aux catalyseurs, $Mo_2C$ et WC, on compare l'activité (ou la vitesse d'isomérisation) des catalyseurs traités par $H_2$ + pentane, et selon l'invention par $H_2$ + pentane + 0,05 % Pt, dans les réactions d'isomérisation de différents composés à 350° C.

Dans ces figures on a repris les valeurs de r données dans les tableaux précédents concernant HEX et MCP et indiqué des valeurs de r lorsque M2P et M3P sont les hydrocarbures de départ.

Dans les tableaux 5 et 5a relatifs à $Mo_2C$, on voit nettement que les vitesses r d'isomérisation ou mieux, que les rendements d'isomérisation sont nettement améliorés avec le catalyseur activé selon la présente invention, par rapport à ce qu'il était possible d'obtenir avec des activations faites selon l'art antérieur. Cette comparaison est valable même avec les catalyseurs activés à l'hydrogène seul ; en effet la conversion a été faite dans ce cas à 600° C, et si une telle température avait été utilisée pour un catalyseur activé selon l'invention, on aurait obtenu un rendement qui se situerait plutôt vers 10.000-100.000.

Dans la figure 1 qui reprend ces résultats et les élargit à d'autres produits (M2P et M3P) on voit bien que la vitesse d'isomérisation obtenue avec le carbure activé selon l'invention est de plus de 3 fois supérieure à celle obtenue avec un carbure activé seulement par $H_2$ + pentane sans Pt.

Dans les tableaux 6 et 6a, relatifs à WC, on note les mêmes résultats que précédemment, qui donnent donc un net avantage au carbure réactivé selon la présente invention. De plus, on a comparé ce dernier à un catalyseur classique où l'élément actif est le Pt déposé sur un support d'alumine gamma ; cela illustre de nouveau l'avantage que représente le carbure de métal lourd de surface spécifique élevée, activé à l'aide d'$H_2$ + pentane en présence d'une faible quantité de Pt, pour améliorer la vitesse et le rendement d'isomérisation ; mais on remarque également que la sélectivité du carbure réactivé selon l'invention est complètement différente de celle du Pt, et donc que le Pt présent dans le carbure agit au niveau de l'activation dudit carbure mais non en tant que catalyseur de conversion d'hydrocarbure.

TABLEAU 5

| Isomérisation du MCP sur catalyseur Mo2C réactivé de différentes façons | | | | |
|---|---|---|---|---|
| Réactivation du carbure | Art antérieur | | | Invention |
| | non réactivé | avec H2 seul | avec H2 + pentane | avec H2 + pentane + 0,05% de Pt |
| Température de conversion ° C | 400 | 600 | 350 | 350 |
| Conversion % | 0,36 | 14,94 | 1,88 | 8,03 |
| r.(10 exp -10 mole/s.g) | 53 | 1005 | 167 | 642 |
| Si % | 72 | 45 | 55 | 60 |
| craquage % | 28 | 55 | 45 | 40 |
| Rendement isomérisation (r x Si) | 38 | 452 | 92 | 385 |
| Isomères en C6 % | | | | |
| DM-2,2B | - | - | - | - |
| M2P | 28 | 13 | 37 | 51 |
| M3P | 11 | 0,5 | 15 | 26 |
| HEX | 33 | 1,5 | 13 | 12 |
| MCP | - | - | - | - |
| BEN | - | 85 | 29 | 11 |
| CYC | 28 | - | 6 | - |
| Hydrocarbures % | | | | |
| C5 + C1 | 44 | 3 | 38 | 32 |
| C4 + C2 | 33 | 12 | 25 | 27 |
| 2C3 | 11 | 13 | 16 | 18 |
| 3C2 | - | 15 | 7 | 8 |
| 6C1 | 12 | 57 | 14 | 15 |

EP 0 396 475 B1

TABLEAU 5a

| Isomérisation du n-hexane sur catalyseur Mo2C réactivé de différentes façons | | | |
|---|---|---|---|
| Réactivation du carbure | Art antérieur | | Invention |
| | avec H2 seul | avec H2 + pentane | avec H2 + pentane + 0,05 % de Pt |
| Température de conversion ° C | 600 | 350 | 350 |
| Conversion % | 40,13 | 4,16 | 14,93 |
| r.(10 exp -10 mole/s.g) | 2497 | 362 | 1283 |
| Si % | 26 | 9 | 14 |
| craquage % | 74 | 91 | 86 |
| Rendement isomérisation (r x Si) | 649 | 33 | 180 |
| Isomères en C6 % | | | |
| DM-2,2B | - | - | - |
| M2P | 3 | 44 | 43 |
| M3P | 1 | 25 | 23 |
| HEX | - | - | - |
| MCP | 1 | 12 | 17 |
| BEN | 56 | 19 | 17 |
| CYC | 39 | - | - |
| Hydrocarbures % | | | |
| C5 + C1 | 3 | 30 | 29 |
| C4 + C2 | 15 | 36 | 32 |
| 2C3 | 25 | 24 | 26 |
| 3C2 | 31 | 5 | 7 |
| 6C1 | 26 | 5 | 6 |

17

TABLEAU 6

| Isomérisation du MCP sur catalyseur WC réactivé de différentes façons | | | | | |
|---|---|---|---|---|---|
| Réactivation du carbure | Art antérieur | | Invention | | Catalyseur Al2O3 + 0,25% de Pt |
| | avec H2 seul | avec H2 + pentane | avec H2 + pentane + 0,05% de Pt | | |
| Température de conversion % | 600 | 450 | 450 | 350 | 350 |
| Conversion % | 13,10 | 2,32 | 8,08* | 12,12* | 2,82 |
| r.(10 exp -10 mole/s.g) | 745 | 178 | 1680 | 945 | 114 |
| Si % | 54 | 41 | 40 | 63 | 93 |
| craquage % | 46 | 59 | 60 | 37 | 7 |
| Rendement isomérisation (r x Si) | 402 | 73 | 672 | 595 | 106 |
| Isomères en C6 % | | | | | |
| DM-2,2B | - | - | 1 | - | - |
| M2P | - | 34 | 28 | 57 | 15 |
| M3P | - | 8 | 23 | 24 | 25 |
| HEX | 1 | 10 | 12 | 15 | 17 |
| MCP | - | - | - | - | - |
| BEN | 99 | 48 | 35 | 4 | 26 |
| CYC | - | - | - | - | 17 |
| Hydrocarbures % | | | | | |
| C5 + C1 | 44 | 20 | 20 | 26 | 68 |
| C4 + C2 | 20 | 22 | 21 | 20 | 5 |
| 2C3 | 21 | 16 | 15 | 13 | 5 |
| 3C2 | 3 | 12 | 12 | 6 | 22 |
| 6C1 | 12 | 30 | 32 | 34 | - |

* Réactions effectuées avec des masses de catalyseur différentes.

TABLEAU 6a

| Isomérisation du n-hexane sur catalyseur WC réactivé de différentes façons | | | | | |
|---|---|---|---|---|---|
| Réactivation du carbure | Art antérieur | | Invention | | Catalyseur Al2O3 + 0,25% de Pt |
| | avec H2 seul | avec H2 + pentane | avec H2 + pentane + 0,05% de Pt | | |
| Température de conversion % | 600 | 450 | 450 | 350 | 350 |
| Conversion % | 32,05 | 3,78 | 16,05* | 15,82* | 2,88 |
| r.(10 exp -10 mole/s.g) | 1336 | 314 | 3510 | 1317 | 120 |
| Si % | 13 | 35 | 18 | 17 | 90 |
| craquage % | 87 | 65 | 82 | 83 | 10 |
| Rendement isomérisation (r x Si) | 174 | 110 | 632 | 224 | 108 |
| Isomères en C6 % | | | | | |
| DM-2,2B | - | - | - | - | - |
| M2P | 26 | 28 | 23 | 46 | 54 |
| M3P | 10 | 19 | 14 | 19 | 38 |
| HEX | - | - | - | - | - |
| MCP | 10 | 30 | 14 | 25 | 8 |
| BEN | 54 | 3 | 49 | 10 | - |
| CYC | - | 20 | - | - | - |
| Hydrocarbures % | | | | | |
| C5 + C1 | 6 | 27 | 17 | 27 | 71 |
| C4 + C2 | 18 | 31 | 24 | 25 | 18 |
| 2C3 | 28 | 21 | 21 | 22 | 11 |
| 3C2 | 24 | 9 | 13 | 6 | - |
| 6C1 | 23 | 12 | 25 | 20 | - |

* Réactions effectuées avec des masses de catalyseur différentes.

**Figure 1** : Activité du Mo₂C activé par H₂ + pentane ( ■ )
et du Mo₂C activé par H₂+ pentane + Pt ( □ )
à 350°C

**Figure 2** : Activité de WC activé par H₂ + pentane ( □ )
et de WC activé par H₂ + pentane + Pt ( ● )
à 450° C.

Exemple 5

Cet exemple illustre l'application des carbures à surface spécifique élevée à la conversion des gaz d'échappement.

On a utilisé un carbure $Mo_2C$ sour forme de granulé de 0,2 à 0,5 mm, ayant une surface spécifique de 168 $m^2$/g préparé selon le procédé illustré dans l'exemple 1 et activé à 600° C selon le procédé du deuxième perfectionnement en utilisant 0,05 % de Pt, un flux d'hydrogène et de propane et un traitement de finition sous $H_2$ à 400° C pendant 12 H puis 600° C pendant 2 H.

On a ensuite fait passer différents gaz d'échappement, modélisant la combustion de différents mélanges carburants composés d'essence légère et d'air (mélanges : riche en essence, stoechiométrique, pauvre) à travers 400 mg de granulé de carbure, à raison de 250 $cm^3$/min.

Le tableau 7 résume les conditions d'expérience et les résultats de conversion obtenus ; à titre de comparaison, l'essai 4 est relatif à un mélange carburant stoechiométrique dont les gaz d'échappement ont été convertis à l'aide d'une même masse (400 mg) de catalyseur classique constitué d'un support en $Al_2O_3$ à grande surface et de 1 % de Pt, et 0,2 % de Rh comme éléments actifs.

TABLEAU 7

| | Richesse du mélange carburant (volume d'air pour 1 vol. d'essence) | Composition des gaz d'échappement avant conversion ppm volume (solde=N2) | Température de demi conversion maximum (light off) °C | Conversion maximum Température °C | Conversion maximum Taux % |
|---|---|---|---|---|---|
| **Essai 1 Mélange riche** | 14,25 | | | | |
| CO | | 9700 | 380 | 400 | 20 |
| NO | | 2050 | 450 | 600 | 100 |
| O2 | | 2400 | | 400 | 100 |
| Hydrocarbure (HC) | | 950 | 400 | 600 | 40 |
| **Essai 2 Mélange stoechiométrique** | 14,75 | | | | |
| CO | | 5700 | 350 | 450 | 90 |
| NO | | 2050 | 400 | 470 | 70 |
| O2 | | 6200 | | 400 | 100 |
| HC | | 950 | 380 | 600 | 75 |
| **Essai 3 Mélange pauvre** | 15,25 | | | | |
| CO | | 1800 | 450 | 450 | 90 |
| NO | | 2050 | 400 | 450 | 15 |
| O2 | | 10000 | | 500 | 70 |
| HC | | 950 | 400 | 500 | 65 |
| **Essai 4 Mélange stoechiométrique** | 14,75 | | | | |
| CO | | 5700 | 250 | 400 | 100 |
| NO | | 2050 | 250 | 500 | 80 |
| O2 | | 6200 | | 500 | 70 |
| HC | | 950 | 250 | | |

On voit que, bien que les températures de demi-conversion soient supérieures à celles obtenues avec le catalyseur classique, les taux de conversion sont comparables. Le fait qu'il faille utiliser une température de conversion un peu plus élevée avec les carbures, n'est pas gênant: cela revient à rapprocher le pot catalytique de la source des gaz d'échappement, ce qui est possible. Par contre, le coût du catalyseur de l'invention est nettement avantageux.

Exemple 6

Cet exemple illustre l'application des carbures selon l'invention à la catalyse des réactions chimiques, il s'agira ici de l'obtention de benzène (BEN) par déshydrogénation catalytique et sélective du cyclohexane (CYC).

Cette réaction est effectuée à 450° C en présence de différents catalyseurs : un carbure de molybdène à surface spécifique élevée selon l'invention, le même carbure mais cette fois activé par différents métaux du groupe 8 selon le deuxième perfectionnement, et un catalyseur classique à base de 0,25 % de Pt déposé sur un support en alumine.

Le tableau 8 regroupe l'ensemble des résultats ; il donne le pourcentage de CYC converti et la sélectivité de cette conversion, c'est-à-dire la proportion en % de la quantité de benzène obtenue parmi l'ensemble des produits convertis, le rendement de la transformation s'appréciant par le produit conversion-sélectivité. Dans la colonne catalyseur, on a noté la teneur résiduelle en métal ayant servi à faire le traitement d'activation.

Il est plus important d'avoir une bonne sélectivité qu'un bon rendement ou une bonne conversion; en effet les sous-produits de craquage sont inutilisables alors qu'avec une sélectivité très élevée et un rendement insuffisant on peut facilement recycler le CYC non transformé en BEN.

**TABLEAU 8**

| CATALYSEUR | CONVERSION (%) | SELECTIVITE EN BENZENE (%) | RENDEMENT |
|---|---|---|---|
| Mo2C | 6 | 100 | 0,06 |
| Mo2C + 690ppm de Rh | 76 | 97 | 0,74 |
| Mo2C + 500ppm de Pd | 98 | 73 | 0,71 |
| Mo2C + 500ppm de Co | 69 | 66 | 0,46 |
| Pt (0,25%)/alumine | 100 | 61 | 0,61 |

On voit que le carbure de molybdène selon l'invention a une très bonne sélectivité ; par contre son rendement de conversion a besoin d'être amélioré par un traitement d'activation selon l'invention sans détériorer sa sélectivité et on obtient alors un rendement en général supérieur a celui obtenu avec un catalyseur classique à base de Pt sur support d'alumine. L'activation à l'aide de Co peut être intéressante à cause du coût très modéré dudit Co.

**Revendications**

1. Procédé d'obtention de carbures de métaux lourds de surface spécifique élevée caractériseé en ce qu'on fait réagir un composé a' l'état gazeux dudit métal lourd avec du carbone réactif ayant une surface spécifique au moins égale à 200 m$^2$ g$^{-1}$ à une température comprise entre 900° C et 1400° C.

2. Procédé selon la revendication 1, caractérisé en ce que ledit composé gazeux est un oxyde ou un iodure.

3. Procédé selon l'une quelconque des revendications 1 et 2, caractérisé en ce que les métaux sont les métaux de transition (3b, 4b, 5b, 6b, 7b, 8 des séries 4-5-6 de la classification périodique des éléments), les terres rares ou les actinides.

4. Procédé selon la revendication 3 caractérisé en ce que les métaux lourds sont choisis parmi l'un au moins des éléments W, Mo, Re, V, Nb.

5. Procédé selon l'une quelconque des revendications 1 à 4 caractérisé en ce que le carbone réactif est du charbon actif sous forme de poudre ou de poudre agglomérée.

6. Procédé selon l'une quelconque des revendications 1 à 5 caractérisé en ce que la température est comprise entre 1000 et 1250° C.

7. Procédé selon l'une quelconque des revendications 1 à 6 caractérisé en ce que la réaction a lieu à une pression inférieure à 13 hPa (10 mm Hg).

8. Procédé selon l'une quelconque des revendications 1 à 7 caractérisé en ce que le carbone réactif est préalablement dopé par un élément métallique comme Ce, Ti, U, Zr, lanthanides...

9. Procédé selon l'une quelconque des revendications 1 à 8 caractérisé en ce que le carbone réactif est utilisé avec un rapport molaire supérieur à 3 par rapport à la stoechiométrie du carbure obtenu.

10. Procédé selon l'une quelconque des revendications 1 à 9, caractérisé en ce qu'en vue de faire réagir le composé gazeux sur le carbone réactif, on dispose une couche de carbone réactif particulaire ou une pièce en carbone réactif sur une couche du composé solide de métal lourd.

11. Procédé selon l'une quelconque des revendications 1 à 9, caractérisé en ce qu'en vue de faire réagir le composé gazeux et le carbone réactif, on mélange préalablement grossièrement ledit composé à l'état solide avec la poudre de carbone.

12. Procédé selon l'une quelconque des revendications 1 à 11, caractérisé en ce qu'on fait réagir partiellement ledit composé gazeux en limitant le taux de conversion du carbone en carbure pour obtenir un carbure mixte, produit intermédiaire comportant un coeur en carbone réactif et une couche extérieure en carbure métallique de surface spécifique élevée.

13. Procédé selon la revendication 12 caractérisé en ce qu'on limite le taux de conversion du carbone en carbure à une valeur inférieure à 40%, de préférence comprise entre 10 et 20 %.

14. Procédé selon l'une quelconque des revendications 12 ou 13 caractérisé en ce qu'on limite la durée de la réaction entre le composé gazeux et le carbone réactif et/ou on limite la quantité de composé gazeux réagissant avec ledit carbone.

15. Procédé selon l'une quelconque des revendications 12 à 14, caractérisé en ce que ledit produit intermédiaire est ensuite traité à une température comprise de préférence entre 1100° et 1400° C, en présence de SiO gazeux de façon à transformer le coeur dudit produit intermédiaire en carbure de silicium.

16. Procédé selon l'une quelconque des revendications 12 à 14, caractérisé en ce que ledit produit intermédiaire est ensuite traité à une température, comprise entre 900 et 1400° C, et de préférence entre 1000 et 1250° C, selon l'une quelconque des revendications 1 à 11, à l'aide d'un composé à l'état gazeux d'un métal lourd différent de celui utilisé pour l'obtention de ladite couche extérieure, de façon à transformer le coeur dudit produit intermédiaire en carbure de métal lourd.

17. Procédé selon l'une quelconque des revendications 1 à 16, caractérisé en ce qu'on imprègne lesdits carbures ou carbures mixtes de surface spécifique élevée à l'aide d'une solution suffisamment diluée d'un sel soluble d'au moins un métal du groupe 8 pour obtenir un carbure imprégné comportant peu de métal, on sèche ledit carbure imprégné, puis traite à haute température sous un courant d'hydrogène et d'hydrocarbure gazeux en vue d'améliorer l'activité catalytique de la surface desdits carbures.

18. Procédé selon la revendication 17 caractérisé en ce que le, ou les métaux du groupe 8 sont le Pt, Pd, Rh, Ir, Co, Ni, Fe.

19. Procédé selon la revendication 18, caractérisé en ce que dans le cas du Pt la quantité de Pt retenue par le carbure est d'au plus 0,05 % environ et de préférence supérieure à 0,001 %, compté en poids de Pt par rapport au carbure total.

20. Procédé selon l'une quelconque des revendications 17 à 19, caractérisé en ce que le traitement thermique est effectué à une haute température d'au moins 500° C avec un mélange H2-hydrocarbure gazeux en exces contenant de 1 à 50 % (en volume) d'hydrocarbure et que l'excès dudit mélange est recyclé après élimination de l'eau de réaction sous-produite.

21. Procédé selon l'une quelconque des revendications 17 à 20, caractérisé en ce que l'hydrocarbure est un hydrocarbure aliphatique tel que le pentane.

22. Procédé selon l'une quelconque des revendications 17 à 21, caractérisé en ce qu'on effectue un traitement de finition consistant à faire passer sur le catalyseur un courant d'hydrogène à haute température pendant 1 à 20 H, traitement éventuellement précédé d'une mise sous vide vers 350-500° C pendant 1 à 3 H.

23. Procédé selon l'une quelconque des revendications 1 à 22 caractérisé en ce que lesdits carbures ou carbures mixtes à surface spécifique élevées sont partiellement nitrurés et oxydés.

24. Carbure mixture de surface spécifique élevée sous forme de granulé ou de pièces de forme, caractérisé en ce que le granulé ou la pièce de forme comporte une couche extérieure en carbure de métal lourd et un coeur en carbure de silicium ou de métal lourd différent.

25. Carbure mixte selon la revendication 24, caractérisé en ce que la couche extérieure est en carbure de molybdène, le coeur en carbure de silicium et que ladite couche comporte du siliciure de molybdène.

26. Carbure obtenu selon l'une quelconque des revendications 1 à 23, caractérisé en ce que c'est un carbure WC hexagonal de surface spécifique supérieure à 300 $m^2g^{-1}$.

27. Procédé de catalyse chimique à haute température, de catalyse pétrochimique ou de catalyse de gaz de pots d'échappement avec un catalyseur ou support de catalyseur en carbure de métal lourd, caractérisé en ce que ledit catalyseur ou support de catalyseur est préparé par réaction d'un composé à l'état gazeux dudit métal lourd avec du carbone réactif ayant une surface spécifique d'au moins 200 $m^2/g$ à une température comprise entre 900 et 1400° C.

28. Procédé de catalyse de gaz de pots d'échappement selon la revendication 27, caractérisé en ce que la réaction de conversion des gaz d'échappement de moteur à combustion interne a lieu à une température supérieure à environ 200° C.

29. Procédé de catalyse selon l'une des revendications 27 ou 28, caractérisé en ce que le carbure de métal lourd est du carbure de molybdène $Mo_2C$ ou du carbure de tungstène WC.

30. Procédé de catalyse selon l'une des revendications 27 à 29, caractérisé en ce que le carbure est un carbure mixte ayant un coeur et une couche extérieure différents.

31. Procédé de catalyse selon la revendication 30, caractérisé en ce que le coeur est en carbure de silicium à surface spécifique élevée ou en carbone réactif.

**Claims**

1. A method for obtaining heavy metal carbides with a high specific surface area, characterised in that a compound in the gaseous state of said heavy metal is reacted with reactive carbon with a specific surface area which is at least equal to 200 $m^2\ g^{-1}$ at a temperature of between 900° C and 1400° C.

EP 0 396 475 B1

2. A method according to Claim 1, characterised in that said gaseous compound is an oxide or an iodide.

3. A method according to either of Claims 1 or 2, characterised in that the metals are transition metals (3b, 4b, 5b, 6b, 7b, 8 of series 4-5-6 of the periodic classification of elements), rare earths or actinides.

4. A method according to Claim 3, characterised in that the heavy metals are selected from at least one of the elements W, Mo, Re, V, Nb.

5. A method according to any one of Claims 1 to 4, characterised in that the reactive carbon is active charcoal in powder or agglomerated powder form.

6. A method according to any one of Claims 1 to 5, characterised in that the temperature is between 1000 and 1250°C.

7. A method according to any one of Claims 1 to 6, characterised in that the reaction takes place at a pressure of less than 13 hPa (10 mm Hg).

8. A method according to any one of Claims 1 to 7, characterised in that the reactive carbon is doped beforehand with a metallic element such as Ce, Ti, U, Zr, lanthanides . . .

9. A method according to any one of Claims 1 to 8, characterised in that the reactive carbon is used with a molar ratio greater by 3 than the stoichiometry of the carbide obtained.

10. A method according to any one of Claims 1 to 9, characterised in that with a view to reacting the gaseous compound on the reactive carbon, a layer of particular reactive carbon or a piece of reactive carbon is disposed on a layer of the solid heavy metal compound.

11. A method according to any one of Claims 1 to 9, characterised in that with a view to reacting the gaseous compound with the reactive carbon, said compound in the solid state is roughly mixed beforehand with the carbon powder.

12. A method according to any one of Claims 1 to 11, characterised in that said gaseous compound is partially reacted by limiting the conversion rate of the carbon into carbide in order to obtain a mixed carbide, an intermediate product comprising a core of reactive carbon and an outer layer of metallic carbide with a high specific surface area.

13. A method according to Claim 12, characterised in that the conversion rate of the carbon into carbide is limited to a value of less than 40%, preferably between 10 and 20%.

14. A method according to any one of Claims 12 or 13, characterised in that the duration of the reaction between the gaseous compound and the reactive carbon is limited and/or the amount of gaseous compound reacting with said carbon is limited.

15. A method according to any one of Claims 12 to 14, characterised in that said intermediate product is then treated at a temperature which is preferably between 1100 and 1400°C, in the presence of gaseous SiO in order to convert the core of said intermediate product into silicon carbide.

16. A method according to any one of Claims 12 to 14, characterised in that said intermediate product is then treated at a temperature of between 900 and 1400°C, and preferably between 1000 and 1250°C, according to any one of Claims 1 to 11, by means of a compound in the gaseous state of a heavy metal which is different from that used to obtain said outer layer, in such a way as to convert the core of said intermediate product into heavy metal carbide.

17. A method according to any one of Claims 1 to 16, characterised in that said carbides or mixed carbides with a high specific surface area are impregnated with a sufficiently diluted solution of a soluble salt of at least one group 8 metal in order to obtain an impregnated carbide comprising a little metal, said impregnated carbide is dried, then treated at high temperature in a hydrogen and gaseous hydrocarbon flow in order to improve the catalytic activity of the surface area of said carbides.

26

EP 0 396 475 B1

18. A method according to Claim 17, characterised in that the group 8 metal(s) is/are Pt, Pd, Rh, Ir, Co, Ni, Fe.

19. A method according to Claim 18, characterised in that in the case of Pt the amount of Pt retained by the carbide is at the most about 0.05% and preferably greater than 0.001% reckoned by weight of Pt in relation to the total carbide.

20. A method according to any one of Claims 17 to 19, characterised in that the heat treatment is carried out at a high temperature which is at least 500°C with a mixture of $H_2$ and gaseous hydrocarbon in excess, containing between 1 and 50% (by volume) of hydrocarbon, and in that the excess of said mixture is recycled after elimination of the by-product which is reaction water.

21. A method according to any one of Claims 17 to 20, characterised in that the hydrocarbon is an aliphatic hydrocarbon such as pentane.

22. A method according to any one of Claims 17 to 21, characterised in that a finishing treatment is carried out which consists in passing a hydrogen flow over the catalyst at high temperature for between 1 and 20 hours, which treatment may be preceded by the establishing of a vacuum at about 350-500°C for between 1 and 3 hours.

23. A method according to any one of Claims 1 to 22, characterised in that said carbides or mixed carbides with a high specific surface area are partially nitrided and oxidised.

24. A mixed carbide with a high specific surface area in the form of a granulate or shaped pieces, characterised in that the granulate or the shaped piece comprises an outer layer of heavy metal carbide and a core of silicon carbide or other heavy metal.

25. A mixed carbide according to Claim 24, characterised in that the outer layer is molybdenum carbide, the core is of silicon carbide, and said layer comprises molybdenum silicide.

26. A carbide obtained according to any of Claims 1 to 23, characterised in that it is a hexagonal WC carbide with a specific surface area greater than 300 $m^2g^{-1}$.

27. A method for high temperature chemical catalysis, for petrochemical catalysis or gas catalysis for catalytic exhaust converters with a catalyst or catalyst support of heavy metal carbide, characterised in that said catalyst or catalyst support is prepared by reacting a compound in the gaseous state of said heavy metal with reactive carbon which has a specific surface area of at least 200 $m^2g^{-1}$ at a temperature of between 900 and 1400°C.

28. A method for the gas catalysis catalytic exhaust converters, according to Claim 27, characterised in that the conversion reaction of the exhaust gases of an internal combustion engine takes place at a temperature which is greater than about 200°C.

29. A method of catalysis according to one of Claims 27 or 28, characterised in that the heavy metal carbide is molybdenum carbide $Mo_2C$ or tungsten WC carbide.

30. A method of catalysis according to one of Claims 27 to 29, characterised in that the carbide is a mixed carbide with a core and an outer layer which are different.

31. A method of catalysis according to Claim 30, characterised in that the core is made of silicon carbide with a high specific surface area or of reactive carbon.

**Patentansprüche**

1. Verfahren zur Herstellung von Schwermetallkarbiden mit erhöhter spezifischer Oberfläche,
   **dadurch gekennzeichnet,**
   daß man eine gasförmige Verbindung des Schwermetalls mit reaktivem Kohlenstoff einer spezifischen Oberfläche von Wenigstens 200 $m^2$ $g^{-1}$ bei einer Temperatur im Bereich von 900 °C bis 1400 °C

27

reagieren läßt.

2. Verfahren nach dem Anspruch 1,
dadurch gekennzeichnet,
daß die gasförmige Verbindung ein Oxid oder ein Jodid ist.

3. Verfahren nach irgendeinem der Ansprüche 1 und 2,
dadurch gekennzeichnet,
daß die Metalle die Übergangsmetalle (3b, 4b, 5b, 6b, 7b, 8 der Gruppen 4-5-6 des Periodischen Systems der Elemente), die Seltenen Erden oder die Aktiniden sind.

4. Verfahren nach dem Anspruch 3,
dadurch gekennzeichnet,
daß die Schwermetalle unter wenigstens einem der Elemente W, Mo, Re, V, Nb gewählt werden.

5. Verfahren nach irgendeinem der Ansprüche 1 bis 4,
dadurch gekennzeichnet,
daß der reaktive Kohlenstoff Aktivkohle in Pulver- oder agglomerierter Pulverform ist.

6. Verfahren nach irgendeinem der Ansprüche 1 bis 5,
dadurch gekennzeichnet,
daß die Temperatur im Bereich von 1000 bis 1250 °C ist.

7. Verfahren nach irgendeinem der Ansprüche 1 bis 6,
dadurch gekennzeichnet,
daß die Reaktion bei einem Druck unter 13 hPa (10 mm Hg) stattfindet.

8. Verfahren nach irgendeinem der Ansprüche 1 bis 7,
dadurch gekennzeichnet,
daß der reaktive Kohlenstoff vorab mit einem metallischen Element wie Ce, Ti, U, Zr, Lanthaniden ... dotiert wird.

9. Verfahren nach irgendeinem der Ansprüche 1 bis 8,
dadurch gekennzeichnet,
daß der reaktive Kohlenstoff mit einem Molverhältnis über 3 bezüglich der Stöchiometrie des erhaltenen Karbids verwendet wird.

10. Verfahren nach irgendeinem der Ansprüche 1 bis 9,
dadurch gekennzeichnet,
daß man, um die gasförmige Verbindung mit dem reaktiven Kohlenstoff reagieren zu lassen, eine Schicht teilchenförmigen reaktiven Kohlenstoffs oder ein Stück reaktiven Kohlenstoffs auf einer Schicht der festen Schwermetallverbindung anordnet.

11. Verfahren nach irgendeinem der Ansprüche 1 bis 9,
dadurch gekennzeichnet,
daß man, um die gasförmige Verbindung und den reaktiven Kohlenstoff reagieren zu lassen, vorab die Verbindung im festen Zustand mit dem Kohlenstoffpulver grob vermischt.

12. Verfahren nach irgendeinem der Ansprüche 1 bis 11,
dadurch gekennzeichnet,
daß man die gasförmige Verbindung teilweise reagieren läßt, indem man den Umwandlungsgrad des Kohlenstoffs zu Karbid begrenzt, um ein Mischkarbid als Zwischenprodukt zu erhalten, das einen Kern aus reaktivem Kohlenstoff und eine Außenschicht aus Metallkarbid mit erhöhter spezifischer Oberfläche aufweist.

13. Verfahren nach dem Anspruch 12,
dadurch gekennzeichnet,
daß man den Umwandlungsgrad des Kohlenstoffs zu Karbid auf einen Wert unter 40 %, vorzugsweise

EP 0 396 475 B1

im Bereich von 10 bis 20 %, begrenzt.

14. Verfahren nach irgendeinem der Ansprüche 12 oder 13,
dadurch gekennzeichnet,
daß man die Dauer der Reaktion zwischen der gasförmigen Verbindung und dem reaktiven Kohlenstoff begrenzt und/oder die Menge der mit dem Kohlenstoff reagierenden gasförmigen Verbindung begrenzt.

15. Verfahren nach irgendeinem der Ansprüche 12 bis 14,
dadurch gekennzeichnet,
daß das Zwischenprodukt anschließend bei einer Temperatur, die vorzugsweise zwischen 1100 und 1400 °C liegt, in Gegenwart von gasförmigem SiO derart behandelt wird, um den Kern des Zwischenprodukts in Siliziumkarbid umzuwandeln.

16. Verfahren nach irgendeinem der Ansprüche 12 bis 14,
dadurch gekennzeichnet,
daß das Zwischenprodukt anschließend bei einer Temperatur, die zwischen 900 und 1400 °C und vorzugsweise zwischen 1000 und 1250 °C liegt, gemäß irgendeinem der Ansprüche 1 bis 11 mittels einer gasförmigen Verbindung eines von dem zum Erhalten der äußeren Schicht verschiedenen Schwermetalls derart behandelt wird, um den Kern des Zwischenprodukts in Schwermetallkarbid umzuwandeln.

17. Verfahren nach irgendeinem der Ansprüche 1 bis 16,
dadurch gekennzeichnet,
daß man die Karbide oder Mischkarbide erhöhter spezifischer Oberfläche mittels einer ausreichend verdünnten Lösung eines löslichen Salzes wenigstens eines Metalls der Gruppe 8 imprägniert, um ein wenig Metall aufweisendes imprägniertes Karbid zu erhalten, das imprägnierte Karbid trocknet und es danach bei hoher Temperatur unter einem Strom von Wasserstoff und gasförmigem Kohlenwasserstoff behandelt, um die katalytische Aktivität der Oberfläche der Karbide zu verbessern.

18. Verfahren nach dem Anspruch 17,
dadurch gekennzeichnet,
daß das oder die Metalle der Gruppe 8 Pt, Rd, Rh, Ir, Co, Ni, Fe sind.

19. Verfahren nach dem Anspruch 18,
dadurch gekennzeichnet,
daß im Fall des Pt die vom Karbid zurückgehaltene Pt-Menge höchstens etwa 0,05 % und vorzugsweise über 0,001 %, als Pt-Gewicht im Verhältnis zum Gesamtkarbid gerechnet, ist.

20. Verfahren nach irgendeinem der Ansprüche 17 bis 19,
dadurch gekennzeichnet,
daß die Wärmebehandlung bei einer hohen Temperatur von wenigstens 500 °C mit einem gasförmigen $H_2$-Kohlenwasserstoff-Gemisch im Überschuß, das 1 bis 50 (Volumen-)% Kohlenwasserstoff enthält, durchgeführt wird und daß der Überschuß des Gemisches nach Entfernung des Reaktionsnebenproduktwassers zurückgeführt wird.

21. Verfahren nach irgendeinem der Ansprüche 17 bis 20,
dadurch gekennzeichnet,
daß der Kohlenwasserstoff ein aliphatischer Kohlenwasserstoff, wie z. B. Pentan, ist.

22. Verfahren nach irgendeinem der Ansprüche 17 bis 21,
dadurch gekennzeichnet,
daß man eine Endbehandlung durchführt, die darin besteht, über den Katalysator einen Wasserstoffstrom bei hoher Temperatur während 1 bis 20 h vorbeistreichen zu lassen, welcher Behandlung eventuell eine Vakuumbehandlung während 1 bis 3 h bei 350 - 500 °C vorausgeht.

23. Verfahren nach irgendeinem der Ansprüche 1 bis 22,
dadurch gekennzeichnet,
daß die Karbide oder Mischkarbide mit erhöhter spezifischer Oberfläche teilweise nitriert und oxidiert

29

werden.

24. Mischkarbid mit erhöhter spezifischer Oberfläche in Form von Granulat oder Formstücken,
dadurch gekennzeichnet,
daß das Granulat oder Formstück eine äußere Schicht aus Schwermetallkarbid und einen Kern aus Karbid von Silizium oder einem unterschiedlichen Schwermetall aufweist.

25. Mischkarbid nach dem Anspruch 24,
dadurch gekennzeichnet,
daß die äußere Schicht aus Molybdänkarbid ist, der Kern aus Siliziumkarbid ist und daß die Schicht Molybdänsilizid aufweist.

26. Nach irgendeinem der Ansprüche 1 bis 23 hergestelltes Karbid,
dadurch gekennzeichnet,
daß es ein hexagonales Karbid WC mit einer spezifischen Oberfläche über 300 $m^2$ $g^{-1}$ ist.

27. Verfahren zur chemischen Katalyse bei hoher Temperatur, zur petrochemischen Katalyse oder zur Katalyse von Auspufftopfgas mit einem Katalysator oder Katalysatorträger aus Schwermetallkarbid,
dadurch gekennzeichnet,
daß der Katalysator oder Katalysatorträger durch Reaktion einer gasförmigen Verbindung des Schwermetalls mit reaktivem Kohlenstoff einer spezifischen Oberfläche von wenigstens 200 $m^2$/g bei einer Temperatur im Bereich von 900 bis 1400 °C hergestellt wird.

28. Verfahren zur Katalyse von Auspufftopfgas nach dem Anspruch 27,
dadurch gekennzeichnet,
daß die Reaktion zur Umwandlung der Verbrennungsmotorauspuffgase bei einer Temperatur über etwa 200 °C stattfindet.

29. Katalyseverfahren nach einem der Ansprüche 27 oder 28,
dadurch gekennzeichnet,
daß das Schwermetallkarbid Molybdänkarbid $Mo_2C$ oder Wolframkarbid WC ist.

30. Katalyseverfahren nach einem der Ansprüche 27 bis 29,
dadurch gekennzeichnet,
daß das Karbid ein Mischkarbid mit einem Kern und einer äußeren Schicht ist, die voneinander verschieden sind.

31. Katalyseverfahren nach dem Anspruch 30,
dadurch gekennzeichnet,
daß der Kern aus Siliziumkarbid mit erhöhter spezifischer Oberfläche oder aus reaktivem Kohlenstoff ist.